# EUROPEAN PATENT APPLICATION

(11) **EP 3 499 024 A1**
(43) Date of publication of application: **19.06.2019**
(21) Application number: 17207097.1
(22) Date of filing: 13.12.2017
(51) Int. Cl.: F03D 7/04, F03D 13/25

(54) **WAKE OPTIMISATION OF A FLOATING WIND TURBINE**

(71) Applicant: Siemens Gamesa Renewable Energy A/S, 7330 Brande (DK)
(72) Inventor: Mahulja, Stjepan, 2400 Kobenhavn NV (DK); Tibaldi, Carlo, 2300 København (DK)
(74) Representative: Aspacher, Karl-Georg

(57) **Abstract**

The present invention describes a floating wind turbine (10) comprising:
- a tower (2) extending axially along a longitudinal axis (Z) of the floating wind turbine (10),
- a nacelle (3) and a rotor (5) attached to an upper end of the tower (2),
- a floating foundation (8) attached to a bottom end of the tower (2).

The floating foundation (8) includes at least a ballast tank (12a,b) for housing a fluid, the quantity of fluid inside the tank (12a,b) being variable for changing a tilt angle (a) between the longitudinal axis (Z) and a vertical direction.

## Description

### Field of invention

The present invention relates to the field of optimizing wake of a floating wind turbine.

### Art Background

In the technical field of floating wind turbines, it is common to install floating wind farms including a plurality of floating wind turbines proximal to each other.

In wind turbine farms it is important to reduce the wake effect, i.e. the aggregated influence on the energy production of the wind farm, which results from the decrease in wind speed caused by the blockage effect of the turbines.

The reduction of the wake effects is treated in several ways. One way is by performing an optimization of the wind farm layout. Another way is by using wake steering through yaw control.

Tilting the rotor of a wind turbine, i.e. changing the angle between the rotation axis of the rotor and the longitudinal axis of the turbine tower, is also a known method to steer the wake away from other turbines positioned downwind, hence improving the overall power production of the plurality of wind turbines. Changing the angle between the rotation axis of the rotor and the longitudinal axis of the turbine tower also causes an inclination of the wind turbine with respect to prevalent direction of the wind.

However, rotor tilt is often an unfeasible solution for a traditional upwind turbine due to the reduced clearance between the rotor blades and the tower, which will cause the blades to interfere with the tower, even for small values of the rotor tilt.

When dealing with floating wind turbine, it would be desirable to provide the possibility to vary without limitation the orientation of the wind turbine rotor with respect to the prevalent direction of the wind.

### Summary of the Invention

This need is met by the subject matter according to the independent claim. Advantageous embodiments of the present invention are described by the dependent claims.

According to a first aspect of the present invention a floating wind turbine is provided. The floating wind turbine comprises:
- a tower extending axially along a longitudinal axis of the floating wind turbine,
- a nacelle and a rotor attached to an upper end of the tower,
- a floating foundation attached to a bottom end of the tower,
wherein the floating foundation includes at least a ballast tank for housing a fluid, the quantity of fluid inside the tank being variable for the purpose of changing the tilt angle of the turbine. The tilt angle is defined as the angle between the tower longitudinal axis and a vertical direction. According to a second aspect of the present invention a method of operating the above described floating wind turbine is provided. The method includes the steps of:
- measuring the tilt angle,
- changing the quantity of fluid inside at least one ballast tank in order to vary the tilt angle to a predefined value.

Advantageously, this invention circumvents the limitation of the rotor tilt solution described above with reference to the prior art, i.e. varying the angle between the rotation axis of the rotor and the tower longitudinal axis of the turbine, by tilting or leaning the whole floating turbine structure.

According to an embodiment of the present invention, the floating wind turbine comprises at least a pumping device for changing the quantity of fluid inside the ballast tanks.
The leaning of the turbine is made possible by pumping a fluid, lighter than water (e.g. air), into ballast tanks attached to the main floating foundation and, hence, obtaining an equivalent effect as by tilting the rotor.
The floating foundation may include at least one ballast tank for housing a fluid located away from the longitudinal axis of the floating wind.
According to a specific embodiment of the present invention, the floating foundation includes at least two ballast tanks for housing a fluid, the longitudinal axis of the floating wind turbine being interposed between the two ballast tanks. Advantageously, at least one of the ballast tanks of the turbine may be at least partially filled with a fluid lighter than water creating an off-set buoyancy force. This force generates a tilting moments that causes the entire structure to lean forwards, backwards, or sideways.

According to an embodiment of the present invention, the floating wind turbine comprises a tilting control device including at least a tilting sensor configured to measure the tilt angle and a controller coupled to the alignment sensor and to the pumping device, the controller being configured to operate the pumping device for changing the quantity of fluid inside the ballast tank in order to vary the tilt angle to a predefined value.
This arrangement permits to control the buoyancy properties of the ballast tank(s) in order to provide the desired value of the tilt angle.

According to a further embodiment of the present invention, the value of the tilt angle may be chosen in order to minimize a wake effect generated by the floating wind turbine.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Figure 1 shows a schematic view of a floating wind turbine according to the present invention, in a first operating condition.
Figure 2 shows a schematic view of a floating wind turbine according to the present invention, in a second operating condition.

### Detailed Description

The illustrations in the drawings are schematically. It is noted that in different figures, similar or identical elements are provided with the same reference signs.

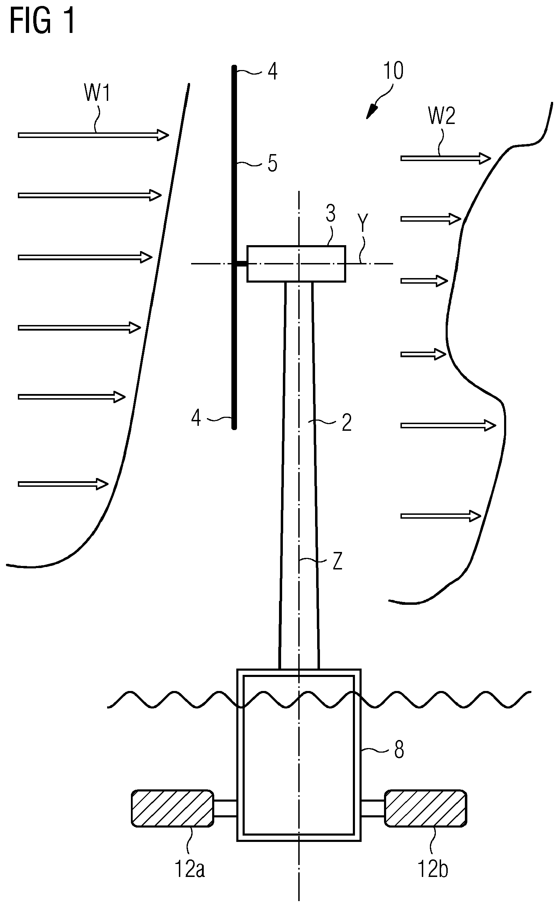

**Figure 1** shows a floating wind turbine 10 according to the invention in a first operative condition. The wind turbine 10 comprises a tower 2, extending axially along a longitudinal axis Z of the floating wind turbine 10.
A nacelle 3 is attached to an upper end of the tower 2. The wind turbine 1 further comprises a wind turbine rotor 5 having three blades 4 (in the perspective of Figure 1 only two blades 4 are visible). The rotor 5 is attached to the nacelle 3 in order to be rotatable around a rotational axis Y. In the first operative condition of figure 1 rotational axis Y is basically oriented parallel to the prevalent direction of the wind W1, upstream the rotor 5.
The wind turbine 1 further comprises a floating foundation 8 attached to a bottom end of the tower 2, axially opposed to the nacelle 3 along the longitudinal axis Z. In operation, the floating foundation 8 is subject to be at least partially immersed in water.
The floating foundation 8 includes two ballast tanks 12a,b for housing water and a fluid lighter than water, for example air. In the embodiment of the attached figures the two ballast tanks 12a,b are placed at opposite side of the longitudinal axis Z, in such a way that the longitudinal axis Z of the floating wind turbine 10 is interposed between the two ballast tanks 12a,b. A first front ballast tank 12a is placed upstream with respect to the prevalent direction of the wind W1 and a second rear ballast tank 12b is placed downstream with respect to the prevalent direction of the wind W1.
The quantity of water or of fluid inside the ballast tanks 12a,b is variable for changing a tilt angle α between the longitudinal axis Z and a vertical direction. This also determines a variation of inclination between the rotational axis Y and the prevalent direction of the wind W1.
According to other embodiments of the present invention (not shown) any other number of ballast tanks may be used, for example one single ballast tank or an array of ballast tanks distributed around the longitudinal axis Z.
In all the embodiments, inside at least one of the ballast tanks 12a,b the quantity of water and/or of fluid lighter than water may be varied to achieve a desired inclination of the longitudinal axis Z with respect to the vertical direction.
To achieve such functionality, the floating wind turbine 10 comprises a pumping device (not shown in the attached figures) for changing the quantity of water or fluid lighter than water inside the ballast tanks 12a,b.
The floating wind turbine 10 comprises a tilting control device (not shown in the attached figures) including at least a tilting sensor configured to measure the tilt angle α and a controller coupled to the tilting sensor(s) and to the pumping device. The controller is configured to operate the pumping device for changing the quantity of water or fluid lighter than water inside the ballast tanks 12a,b in order to vary the tilt angle α and reach a predefined value.
The value of the tilt angle α may be chosen in order to minimize a wake effect generated by the floating wind turbine 10, as further clarified in the following.

In the first operative condition of figure 1 the ballast tanks 12a,b are completely filled by water and hence symmetric buoyancy is produced. As a consequence the floating wind turbine 1 is in the up-right position with the longitudinal axis Z parallel to the vertical direction and the tilt angle α being equal to zero.

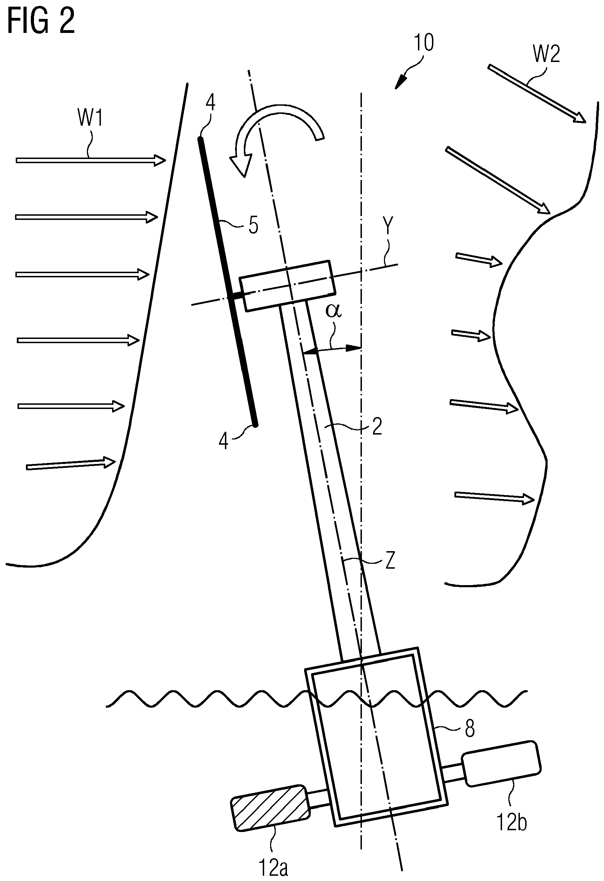

**Figure 2** shows the floating wind turbine 10 in a second operative condition. Figure 2 shows the condition where the rear ballast tank 12b of the floating wind turbine 10 is filled with a fluid lighter than water, for example air, creating an off-set buoyancy force. This force generates a tilting moments that causes the entire floating wind turbine 10 to lean forward, towards the prevalent direction of the wind W1.
The tilting of the entire floating wind turbine 10 avoids the interference between the blades 4 and the tower 2. The wind W2 downstream the nacelle 3 is re-energized, thus allowing a floating wind turbine (not shown) downstream the floating wind turbine 10 to produce more power.
Further, as shown in figure 2 the wake is redirected downwards, which means the downstream turbine experiences less deficit across the rotor.

## Claims

1. Floating wind turbine (10) comprising:
- a tower (2) extending axially along a longitudinal axis (Z) of the floating wind turbine (10),
- a nacelle (3) and a rotor (5) attached to an upper end of the tower (2),
- a floating foundation (8) attached to a bottom end of the tower (2),
wherein the floating foundation (8) includes at least a ballast tank (12a,b) for housing a fluid, the quantity of fluid inside the ballast tank (12a,b) being variable for changing a tilt angle (α) between the longitudinal axis (Z) and a vertical direction.

2. Floating wind turbine (10) according to claim 1, comprising a pumping device for changing the quantity of fluid inside the ballast tank (12a,b).

3. Floating wind turbine (10) according to claim 1 or 2, wherein the floating foundation (8) includes at least one ballast tank (12a,b) for housing a fluid, away from the longitudinal axis (Z) of the floating wind turbine (10).

4. Floating wind turbine (10) according to claim 3, wherein the floating foundation (8) includes at least two ballast tanks (12a,b) for housing a fluid, the longitudinal axis (Z) of the floating wind turbine (10) being interposed between the two ballast tanks (12a,b).

5. Floating wind turbine (10) according to claim 2 or 3 or 4, comprising a tilting control device including at least a tilting sensor configured to measure the tilt angle (α) and a controller coupled to the tilting sensor and to the pumping device, the controller being configured to operate the pumping device for changing the quantity of fluid inside the ballast tank (12a,b) in order to vary the tilt angle (α) to a predefined value.

6. Floating wind turbine (10) according to any of the claims 1 to 5, wherein the at least one ballast tank (12a,b) houses a fluid, which is lighter than water.

7. Floating wind turbine (10) according to any of the claims 1 to 6, wherein the at least one ballast tank (12a,b) in at least one first operating condition is full of water.

8. Floating wind turbine (10) according to claim 7, wherein the at least one ballast tank (12a,b) in at least one second operating condition houses water and a quantity of a fluid lighter than water.

9. Method of operating a floating wind turbine (10) according to any of the claims 1 to 8, including the steps of:
- measuring the tilt angle (α),
- changing the quantity of fluid inside the at least one tank (12a,b) in order to vary the tilt angle (α) to a predefined value.

10. Method according to claim 9, wherein the predefined value is determined in order to minimizes a wake effect generated by the floating wind turbine (10).
